# EUROPÄISCHE PATENTANMELDUNG

(11) **EP 4 488 413 A1**
(43) Veröffentlichungstag der Anmeldung: **08.01.2025**
(21) Anmeldenummer: 23020324.2
(22) Anmeldetag: 03.07.2023
(51) Int. Cl.: C25B 1/04, C25B 9/70, C25B 15/029, C25B 15/08

(54) **VERFAHREN ZUM BETREIBEN EINER ELEKTROLYSEANLAGE UND ELEKTROLYSEANLAGE**

(71) Anmelder: Linde GmbH, 82049 Pullach (DE)
(72) Erfinder: Winkler, Florian, 82049 Pullach (DE); Dietzen, Markus, 82049 Pullach (DE)
(74) Vertreter: Imhof, Dietmar

(57) **Zusammenfassung**

Die Erfindung betrifft ein Verfahren zum Betreiben einer Elektrolyseanlage (100), in der Wasser in mehreren Elektrolysezellen (110.1a, 110.2a, 110.1b, 110.2b) in Sauerstoff und Wasserstoff umgesetzt wird, wobei Fluidströme von einer Sauerstoffseite (114) der mehreren en (110.1a, 110.2a, 110.1b, 110.2b)zusammengefasst und als ein prozessierter Fluidstrom (c) zu einem Gas-Abscheider (120) geführt werden, wobei der prozessierte Fluidstrom (c) Wasser und Gas aufweist, wobei ein sauerstoffhaltiger Fluidstrom (g, h) von dem Gas-Abscheider (120) abgeführt wird, wobei der sauerstoffhaltiger Fluidstrom Gas aufweist, wobei der sauerstoffhaltige Fluidstrom (h, d) einem Sauerstoffbereich der Elektrolyseanlage (100) zugeführt wird, und wobei der sauerstoffhaltige Fluidstrom (d), bevor er dem Sauerstoffbereich der Elektrolyseanlage (100) zugeführt wird, durch eine Einrichtung (148) zur Wasserstoffentfernung, insbesondere einen Rekombinationsreaktor, geführt wird.

## Beschreibung

Die Erfindung betrifft ein Verfahren zum Betreiben einer Elektrolyseanlage zur Wasserelektrolyse, sowie eine solche Elektrolyseanlage, die z.B. zur Gewinnung von Wasserstoff eingesetzt wird.

### Stand der Technik

Zur Gewinnung von Wasserstoff kann die sog. Elektrolyse eingesetzt werden, bei der z.B. Wasser durch elektrische Energie in Sauerstoff und Wasserstoff aufgespaltet bzw. umgesetzt wird. Hierbei wird auch von der Wasser-Elektrolyse gesprochen. Hier kommt z.B. die sog. Protonen-Austausch-Membran-Elektrolyse (PEM-Elektrolyse, "Proton Exchange Membrane"-Elektrolyse) in Betracht. In diesem Zusammenhang ist auch von PEM-Elektrolyseanlagen oder PEM-Elektrolyseuren die Rede.

Ein Großteil des Wassers verbleibt bei der PEM-Elektrolyse in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise in einem Behälter aus dem Wasser abgeschieden. Der Druck an der Kathode (Wasserstoffseite bzw. Wasserstoffbildung) liegt hier typischerweise bei über 20 barg oder auch über 30 barg. An der Anode (Sauerstoffseite bzw. Wasseraufspaltung) liegt der Druck des Sauerstoffproduktes hingegen unterhalb des Druckes auf der Kathodenseite, z.B. leicht über Atomsphärendruck.

Es kann jedoch vorkommen, dass auch Wasserstoff zu einem gewissen Teil auf die Sauerstoffseite zurück diffundiert oder anderweitig, z.B. aufgrund Defekten oder Rissen in der Membran, dorthin gelangt. Es kann als ein explosives Gemisch entstehen, das sich unter Umständen entzünden und durch die entstehende Explosion die Elektrolyseanlage beschädigen kann. Vor diesem Hintergrund stellt sich die Aufgabe, eine Elektrolyseanlage bzw. deren Betrieb sicherer zu machen.

Durch den Druckunterschied zwischen den Elektroden kann es zu einem konstanten Wasserstoffübergang (sog. "cross over") durch die Membran kommen. Dadurch kann es in bestimmten Betriebsszenarien (z.B. Teillast, Anfahren, Abfahren, Stillstand einzelner Elektrolysezellen bzw. sog. Stacks) zu einer Wasserstoffansammlung auf der Sauerstoffseite der Elektrolyse kommen, während die Elektrolyseeinheiten in Betrieb sind.

Eine Wasserstoff-Leckage durch Membran-Perforation von der Kathodenseite mit z.B. mehr 20 oder 30 barg auf die Anodenseite kann auch als Folge unerkannter Membran-Defekte auftreten, während die Elektrolysezellen in Betrieb sind. Ein Membran-Riss kann zu einem schlagartigem Übergang größerer Mengen an Wasserstoff von der Kathodenseite auf die Anodenseite führen.

Aus der EP 3 971 324 A1 ist z.B. eine Elektrolyseanlage bekannt, bei der Inertgas in den Sauerstoffproduktstrom eingebunden wird, um die Wasserstoffkonzentration zu reduzieren. Die in der EP 3 971 324 A1 beschriebenen Maßnahmen gewährleisten jedoch keinen inhärent sicheren Betrieb, da die Maßnahmen erst dann getroffen werden, wenn ein Überschreiten einer bestimmten Wasserstoffkonzentration detektiert wurde. In der Regel sind die Ansprechzeiten von Analysenequipment jedoch zu lang, um einen sicheren Betrieb zu gewährleisten.

Vor diesem Hintergrund stellt sich die Aufgabe, eine bessere Möglichkeit anzugeben, bei der Wasser-Elektrolyse, z.B. der PEM-Elektrolyse, das Explosionsrisiko zu senken und so den Betrieb der Elektrolyseanlage zu verbessern.

### Offenbarung der Erfindung

Diese Aufgabe wird durch ein Verfahren zum Betreiben einer Elektrolyseanlage sowie eine Elektrolyseanlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die Erfindung beschäftigt sich mit der Wasser-Elektrolyse sowie Elektrolyseanlagen bzw. deren Betrieb hierfür. Solche Elektrolyseanlagen dienen typischerweise dem Erzeugen oder Gewinnen von Wasserstoff mittels Elektrolyse. Bei der sog. Wasser-Elektrolyse wird Wasser in Wasserstoff und Sauerstoff umgesetzt (gespalten), d.h. neben Wasserstoff wird also zugleich auch immer Sauerstoff gewonnen bzw. erzeugt. Bei der Wasser-Elektrolyse gibt es z.B. die sog. alkalische Wasser-Elektrolyse (AEL, "Alkaline Electrolysis") oder die sog. Protonen-Austausch-Membran-Elektrolyse (PEM-Elektrolyse, "Proton Exchange Membrane"-Elektrolyse). Die Grundlagen hierzu sind an sich bekannt, z.B. aus " Bessarabov et al: PEM electrolysis for Hydrogen production. CRC Press."

Daneben gibt es auch sog. Festoxid-Elektrolyseurzellen (SOEC, "Solid Oxide Electrolysis Cell") und die Anionen-Austausch-Membran-Elektrolyse (AEM-Elektrolyse, "Anion Exchange Membrane"-Elektrolyse). Insbesondere diejenigen Elektrolyse-Technologien, die bei niedrigen Temperaturen erfolgen, also z.B. die PEM-, AEL- und AEM-Elektrolyse, eignen sich aufgrund der Möglichkeiten eines flexiblen Betriebs zur Unterstützung des Übergangs der Energiegewinnung hin zu erneuerbaren Energien.

Bei der PEM-Elektrolyse z.B. wird Wasser, und zwar insbesondere demineralisiertes Wasser, als Einsatzmedium einer Elektrolyseeinheit mit einer Protonen-Austausch-Membran (PEM) zugeführt, in der das Einsatzmedium, also das Wasser, in Wasserstoff und Sauerstoff umgesetzt (gespalten) wird.

Ein Großteil des Wassers verbleibt bei der PEM-Elektrolyse, wie erwähnt, in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise, als prozessierter Fluidstrom, einem Behälter (der als Gas- bzw. Sauerstoff-Abscheider verwendet wird) zugeführt. Dort wird der Sauerstoff aus dem Wasser abgeschieden, es wird ein sauerstoffhaltiger Fluidstrom oder ein sog. Sauerstoffproduktstrom erhalten.

Es kann jedoch vorkommen, dass auch Wasserstoff zu einem gewissen Teil auf die Sauerstoffseite zurück diffundiert oder anderweitig, z.B. aufgrund Defekten oder Rissen in der Membran, dorthin gelangt, wie eingangs erläutert. Der von der Sauerstoffseite abzuführende Fluidstrom (prozessierter Fluidstrom) weist damit nicht nur Wasser und Sauerstoff, sondern ggf. auch Wasserstoff auf, allgemein also Wasser und Gas; unter dem Begriff Gas soll hier allgemein gasförmiges Medium, nicht nur ein einzelnes Gas, sondern auch ein ggf. vorhandenes Gasgemisch verstanden werden. Auf der Sauerstoffseite der Elektrolyseeinheit bzw. im Fluidstrom kann also ein explosives Gemisch entstehen, das sich unter Umständen irgendwo in der Elektrolyseanlage stromabwärts der Elektrolyseeinheit entzünden kann, sei es im Fluidstrom zum Sauerstoff- bzw. Gas-Abscheider oder danach im dort abgeschiedenen und abgeführten Gasstrom (es wird dann eben nicht nur der Sauerstoff, sondern auch der ggf. vorhandene Wasserstoff abgeschieden). Durch die entstehende Explosion bzw. Detonation kann die Elektrolyseanlage beschädigt werden.

Eine Entzündung des Gemisches kann insbesondere dann auftreten, wenn ein Anteil an Wasserstoff im Gas (der Wasseranteil ist hierbei nicht relevant) einen gewissen vorgegebenen Anteil, die sog. untere Explosionsgrenze (LEL, "lower explosive limit") überschreitet; dieses liegt z.B. ei einem Standby-Betrieb oder Betrieb der Elektrolyseanlage mit geringer Last typischerweise bei ca. 4%. Die (untere) Explosionsgrenze eines Gases gibt den Gehalt in einem Gasgemisch an, ab dem eine Entzündung bzw. Explosion bei zugleich ausreichendem Sauerstoffgehalt möglich ist.

Da eine Zündquelle in der Elektrolyseeinheit oder irgendwo stromabwärts in aller Regel nicht ausgeschlossen oder vermieden werden kann, muss mit einer potentiellen Entzündung bzw. Explosion oder Detonation beim Betrieb einer Elektrolyseanlage immer gerechnet werden. Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Die Reaktion zwischen Wasserstoff und Sauerstoff läuft sehr schnell ab und erzeugt sehr hohe Flammengeschwindigkeiten, d.h. hohe Geschwindigkeiten, mit denen sich die Flammen z.B. in entsprechenden Fluidverbindungen oder Fluidleitungen ausbreiten. Bei einer Explosion liegt diese unterhalb, bei einer Detonation typischerweise oberhalb der Schallgeschwindigkeit. Durch Explosionen und Detonationen von Gasen bzw. Gasgemischen kommt es zu einem massiven Druckanstieg. Typischerweise kann bei einer Explosion eines Wasserstoff-Sauerstoff - Gemisches mit einer Druckerhöhung um den Faktor Zehn gerechnet werden. Die Auswirkungen einer Detonation sind deutlich schwerwiegender und weniger genau vorhersagbar. Hier kann der Druckanstiegsfaktor 25 oder auch 50 und mehr betragen, dies ist abhängig von der Geometrie, Turbulenz und weiteren Faktoren. Eine Explosion kann nach einer bestimmten Anlauflänge und einer Mindestkonzentration an Brennstoff und Sauerstoff in eine Detonation umschlagen. Es können also Drücke entstehen, die teils das 25-fache, 50-fache und mehr des eigentlichen Betriebsdrucks in der Elektrolyseanlage, dort insbesondere der Sauerstoffseite und dem Verlauf stromabwärts, ggf. auch stromaufwärts, betragen.

Um also etwaige Schäden an der Elektrolyseanlage zu vermeiden, und damit einen inhärent sicheren Betrieb zu ermöglichen, können die betreffenden Fluid- oder Gasleitungen für entsprechend hohe Drücke ausgelegt und die Eignung durch Tests nachgewiesen werden. Je nach Elektrolyseanlage und Verwendung des Sauerstoffs, können hierbei sehr viele oder lange Leitungen betroffen sein. Dies betrifft nicht nur die Fluidleitungen von der Elektrolyseeinheit zum Gas-Abscheider, sondern auch etwaige Gasleitungen, in denen der abgeschiedene Sauerstoff (und ggf. Wasserstoff) zu einer oder mehreren gewünschten Verwendungen oder sonstigen Verarbeitungsschritten geführt wird. Dies kann zu besonders hohen Kosten führen.

Eine nötige Druckfestigkeit liegt z.B. bei einem Faktor von 20 bis 30, oder zumindest müssen entsprechende Komponenten durch eine zerstörende Prüfung qualifiziert werden; dies führt zu weiteren technischen und ökonomischen Problemen. Hohe Designdrücke führen zu höheren Equipment- bzw. Komponentenkosten. Ein anodenseitiger Betrieb bei höherem Drücken, jedoch Drücken unterhalb der Kathodenseite, kann wegen des zu berücksichtigen Explosionsfaktors schnell zu Baubarkeitsgrenzen führen.

Eine Vermeidung von Reflexionen der Explosionswelle führt dazu, dass der abgeschiedene Sauerstoff nicht genutzt werden kann, da der Weg der Explosionswelle nicht mit zusätzlichen Equipment verbaut sein darf. Der Sauerstoff müsste offen zu Atmosphäre sein bzw. abgeführt werden. Die in EP 3 971 324 A1 beschriebenen Maßnahmen können deswegen nicht realisiert werden. Zudem würden Stäube aus dem in EP 3 971 324 A1 beschriebenen Rekombinationskatalysator das Wasser für die Elektrolyse kontaminieren und zu zusätzlichen Risken eines Defektes an einer Membran führen.

Unabhängig davon ist, wie erwähnt, in der Regel vorgesehen, die Elektrolyseanlage abzuschalten, wenn der Wasserstoffanteil einen gewissen Wert, z.B. 2 Vol. %, erreicht, um etwaige Explosionen oder Detonationen zu verhindern.

Vor diesem Hintergrund wird nun vorgeschlagen, bei einer Elektrolyseanlage in den sauerstoffhaltigen Fluidstrom - der wie erwähnt nicht nur Sauerstoff sondern eben auch einen gewissen Anteil an Wasserstoff enthalten kann - wieder dem Sauerstoffbereich der Elektrolyseanlage, also z.B. dem prozessierten Fluidstrom und/oder dem Gas-Abscheider, zuzuführen. Hierzu kann z.B. ein Gebläse verwendet werden.

Zudem wird vorgeschlagen, eine Elektrolyseanlage mit mehreren Elektrolysezellen zu verwenden. Es werden dann die Fluidströme von der Sauerstoffseite der mehreren Elektrolysezellen zusammengeführt, um den prozessierten Fluidstrom zu erhalten, der dem Gas-Abscheider zugeführt wird. Mehrere, also z.B. zwei, drei, vier, fünf, sechs, acht oder mehr Elektrolysezellen können zusammen eine Elektrolyseeinheit (auch als Stack bezeichnet) bilden. Zweckmäßig ist aber z.B., dass von zwei bis vier Elektrolysezellen, die dann z.B. eine Elektrolyseeinheit bilden, wobei die Fluidströme von der Sauerstoffseite der mehreren Elektrolysezellen zusammengeführt werden, um einen prozessierten Fluidstrom zu erhalten. Denkbar ist, dass dann wieder mehrere solcher Elektrolyseeinheiten (Stacks) mit je mehreren Elektrolysezellen vorgesehen sind, wobei deren prozessierte Fluidströme wiederum zusammengeführt bzw. vereinigt werden können.

Weiterhin wird vorgeschlagen, dass der sauerstoffhaltige Fluidstrom, bevor er dem Sauerstoffbereich der Elektrolyseanlage zugeführt wird, durch eine Einrichtung zur Wasserstoffentfernung, insbesondere einen Rekombinationsreaktor, geführt wird.

Zudem kann der sauerstoffhaltige Fluidstrom, nach der Einrichtung zur Wasserstoffentfernung und bevor er dem Sauerstoffbereich der Elektrolyseanlage zugeführt wird, durch eine Einrichtung zur Reinigung geführt werden. Dort können z.B. anfallendes Wasser sowie Stäube aus dem Rekombinationskatalysator auskondensiert und/oder gefiltert und/oder über einen Direktkühler gewaschen werden.

Hierbei wird sich nun zunutze gemacht, dass eine Wahrscheinlichkeit einer gleichzeitigen Membranschädigung bei mehreren Elektrolysezellen äußerst gering ist. Indem aber die Fluidströme der Sauerstoffseiten der Elektrolysezellen zusammengeführt werden, wird schon auf diese Weise eine etwaige Erhöhung der Wasserstoffkonzentration im Falle einer Störung gering gehalten. Je mehr Elektrolysezellen vorhanden sind, desto größer ist eine dadurch erreichte Verdünnung. Zudem kann insbesondere die Wasserstoff-Konzentration überwacht werden, und zwar einerseits z.B. kontinuierlich oder quasi-kontinuierlich, und andererseits z.B. analytisch. Hierzu kann z.B. eine geeignete Sicherheits- oder Überwachungseinrichtung mit Messeinrichtung oder Sensor vorgesehen sein. Die Wasserstoff-Konzentration kann z.B. im sauerstoffhaltigen Fluidstrom, und zwar bevorzugt vor und/oder nach der Einrichtung zur Reinigung und dabei insbesondere vor der Zufuhr zum Sauerstoffbereich Elektrolyseanlage, überwacht werden.

Besonders vorteilhaft ist z.B. eine Temperaturmessung oder Temperaturüberwachung im oder nach dem Rekombinationsreaktor. Über die Temperaturänderung kann nämlich direkt auf die umgesetzte Menge an Wasserstoff geschlossen werden (eine bestimmte Menge an Wasserstoff, die umgesetzt wird, setzt nämlich eine bestimmte Menge Enthalpie frei, die wiederum eine sehr genau definierte Temperaturänderung zur Folge hat). Eine Menge (z.B. als Volumen- oder Massenstrom gemessen) des sauerstoffhaltigen Fluidstroms, die dem Sauerstoffbereich der Elektrolyseanlage zugeführt wird, kann dann derart eingestellt oder angepasst werden, dass die Wasserstoff-Konzentration einen vorgegebenen Schwellwert, z.B. 2 Vol %, nicht übersteigt.

Wenn bei der Überwachung festgestellt wird, dass die Wasserstoff-Konzentration den vorgegebenen Schwellwert übersteigt, kann wenigstens eine Sicherheitsmaßnahme eingeleitet werden; dies kann z.B. ebenfalls durch die Sicherheitseinrichtung erfolgen. Dies kann insbesondere das Abschalten der Elektrolyseeinheit bzw. der einzelnen Elektrolysezellen umfassen, ebenso das Unterbrechen des prozessierten Fluidstroms von der Sauerstoffseite der Elektrolyseeinheit zu dem Gas-Abscheider und/oder Unterbrechen des sauerstoffhaltigen Fluidstroms, und damit auch zum Rezirkulationskreis.

Auf diese Weise bzw. mit Hilfe dieser Konfiguration kann zu jedem Zeitpunkt ein Anstieg der Wasserstoff-Konzentration im Sauerstoffteil der Elektrolyse, und zwar insbesondere in jeder Elektrolysezelle oder Elektrolyseeinheit, sowie damit auch im gesamten Kreislauf, auf über UEG (4 Vol %) verhindert werden. Geltende Normen und Vorschriften zum sicheren Betrieb einer Wasserstoffanlage können damit eingehalten werden. Wenn also die Wasserstoff-Konzentration in jeder Elektrolysezelle oder Elektrolyseeinheit, und/oder im gesamten Kreislauf unter 4 Vol % gehalten wird, kann von einem inhärent sicheren Betrieb gesprochen werden.

Allgemein kann diese Menge des sauerstoffhaltigen Fluidstroms (auch als Rezirkulationsmenge bezeichnet) je nach Betriebsfall so angepasst werden, dass entweder genügend Ansprechzeit für die Überwachungseinrichtung bzw. Messeinrichtung (Analytik) generiert wird, um rechtzeitig Abschaltungen der Elektrolysezellen vorzunehmen und weitere Gegenmaßnahmen zur Vermeidung von einer Zündung einzuleiten, oder es nie zu einem zündfähigen Gemisch kommen zu lassen, indem durch die Rezirkulationsmenge zu jeder Zeit ausreichende Verdünnung vorhanden ist (inhärent sicherer Betrieb). Die Rezirkulationsmenge entspricht beispielsweise ca. dem 25- bis 50-fachen Volumenstrom in Nm³/h des von einer Elektrolysezelle maximal produziertem Wasserstoff.

Hierbei kann z.B. eine Temperaturüberwachung der stark exothermen Reaktion z.B. mittels Temperaturelement im Reaktorbett des Rekombinationsreaktors als Ergänzung zu der unter beschriebenen Analyse der Wasserstoffkonzentration herangezogen werden. So können z.B. die Anforderungen an die Sensorik und Aktorik innerhalb des Rezirkulationskreises reduziert werden.

Der Rekombinationsreaktor bzw. die Einrichtung zur Wasserstoffentfernung kann eintrittsseitig z.B. bei 65°C bis 120°C, jedoch mindestens 10 K bis 20 K oberhalb des Wassertaupunktes betrieben werden, um die Funktionalität des Katalysators zu garantieren. Damit kann der Rekombinationsreaktionsreaktor vor Kondenswasser geschützt werden. Die GHSV ("gas hourly space velocity") liegt bei ca. 2000 bis 15000 1/h.

Mittels eines Rekombinationsreaktors (oder auch nur als Rekombinator oder als Rekombinationskatalysator bezeichnet) können Wasserstoff und Sauerstoff katalytisch in Wasser umsetzt werden. Auf diese Weise kann die Sicherheit des Rezirkulationskreises erhöht werden. Als Rekombinationsreaktionsreaktoren bzw. Rekombinationskatalysatoren eignen sich z.B. Platin- oder Palladium- Katalysatoren oder aber Mischkatalysatoren aus den genannten Edelmetallen, welche z.B. auf keramischen oder metallischen Trägern aufgebracht sind.

Zudem können die Größe des Rekombinationsreaktors und Eintrittstemperatur derart gewählt werden, dass mindestens 20% des anfallenden Wasserstoffes umgesetzt werden, um ein Anspringen des Rekombinationsreaktors in einem Störfall zu gewährleisten. Hierfür können Eintritts- und Austrittskonzentrationen kontinuierlich analytisch überwacht sowie ggf. auch Temperaturen innerhalb des Katalysatorbettes überwacht werden.

Neben der Kompressionswärme des Gebläses können für eine bessere Temperaturkontrolle des dem Rekombinationsreaktors zuzuführenden, sauerstoffhaltigen Fluidstromes zusätzliche Wärme über einen oder mehrere Wärmetauscher und/oder sog. Feed/Effluent-Wärmetauscher vorgesehen sein.

In einer Ausführungsform ist zudem vorgesehen, einen Teil des sauerstoffhaltigen Fluidstroms, nach der Einrichtung zur Reinigung und bevor er dem Sauerstoffbereich der Elektrolyseanlage zugeführt wird, zur anderweitigen Verwendung abzuführen. Hierzu kann z.B. eine zusätzliche Schaltarmatur vorgesehen sein. Ebenso kann aber auch eine ein- oder mehrstufigen Produktgaskompression vorgesehen sein, wenn dies für die gewünschte Verwendung zweckdienlich ist.

Über die Wasserstoffentfernung wird bereits ein Teil des Wasserstoffes aus dem sauerstoffhaltigen Fluidstrom (dem sog. Sauerstoffproduktstrom) entfernt. Durch die Temperatur und den Druck des sauerstoffhaltigen Fluidstroms sowie die Größe des Rekombinationsreaktors kann die Wasserstoffkonzentration z.B. bereits so weit reduziert werden, dass stromabwärts der ein- oder mehrstufigen Produktgaskompression eine Trocknungseinheit ausreichend sein kann bzw. innerhalb von mehreren Trocknungsbetten der Trocknungseinheit eine kleine Rekombinationskatalysatorschicht nach einem Trocknungsbett und vor einem weiteren Trocknungsbett ausreicht, da diese Art der Katalysatoren besonders unter höherem Druck und unter Abwesenheit von Wasser hoch aktiv sind. Die vorgelagerte Trocknungsschicht kann ausgelegt sein, das Wasser im betreffenden Fluidstrom zu entfernen, die nachliegende Trocknungsschicht kann ausgelegt sein um Rekombinationswasser aufzunehmen, um ein trockenes finale Produkt zu erhalten.

Alle anfallenden wässrigen Ströme können verworfen oder einer Wasserreinigung zugeführt werden, um zusammen mit dem Frischwasser einen Make-Up-Strom mit den nötigen Reinheitsanforderungen für die PEM-Elektrolyse zu erhalten.

Durch die vorgeschlagene Konfiguration kann mit geringem apparativem Aufwand und minimalen Betriebskoste, ein explosionstechnisch sicheres System aufgebaut werden, das die Anzahl der ansonsten explosionsdruckfest auszuführenden Ausrüstungen und Rohrleitungsbauteile und dergleichen im Sauerstoff-System der Elektrolyseanlage bzw. PEM-Elektrolyse deutlich begrenzt und/oder die Auslegung auf den Betriebsdruck reduziert. Dadurch ist eine Nutzung des Nebenproduktes der Elektrolyse, nämlich Sauerstoff, möglich.

Bei Wegfall der Berücksichtigung von Explosionsdrücken können Elektrolysezellen anodenseitig auch bei höheren Drücken betrieben werden, und zwar ohne zusätzliche Druckfestigkeitsansprüche an das Equipment. Statt wie z.B. bisher bei atmosphärischem Betrieb mit Auslegung auf 40 bar ohne Sauerstoffnutzung wegen der Explosionsrisiken, kann nun anodenseitig auch ein Betrieb über atmosphärischem Druck bis hin zum maximalen Betriebsdruck der Anodenseite (z.B. 6 bara) realisiert werden. Dies führt zu Einsparungen von Kompressionsstufenstufen.

Wenngleich die Erfindung vorwiegend in Bezug auf die PEM-Elektrolyse beschrieben wird, so sei darauf hingewiesen, dass sich die Erfindung für alle Wasser-Elektrolysen eignet, bei denen die Gefahr eines zündfähigen Gemisches aus Wasserstoff und Sauerstoff besteht.

Die Erfindung wird nachfolgend unter Bezugnahme auf die beigefügte Zeichnung näher erläutert, welche eine Anlage gemäß einer bevorzugten Ausführungsform der vorliegenden Erfindung zeigt.

### Kurze Beschreibung der Zeichnung

Figur 1 zeigt schematisch eine erfindungsgemäßen Elektrolyseanlage in einer bevorzugten Ausführungsform.
Figuren 2a, 2b, 2c zeigen schematisch Erweiterungen der Elektrolyseanlage gemäß Figur 1.
Figuren 3, 4a, 4b, 5a, 5c zeigen Diagramme zur Erläuterung der Erfindung.

### Ausführliche Beschreibung der Zeichnung

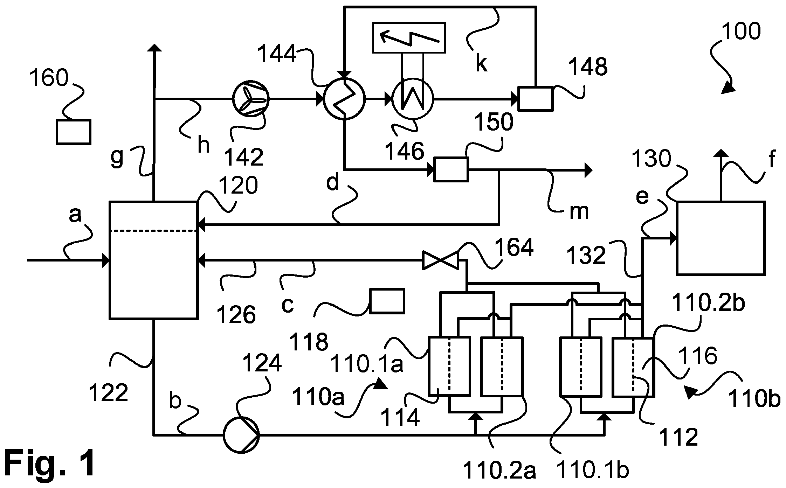

In Figur 1 ist schematisch eine erfindungsgemäße Elektrolyseanlage 100 in einer bevorzugten Ausführungsform dargestellt, bei der auch ein erfindungsgemäßes Verfahren durchführbar ist. Beispielhaft handelt es sich um eine Elektrolyseanlage zur Wasser-Elektrolyse mittels PEM. Insbesondere handelt sich bei der hier gezeigten sowie allgemein im Rahmen der Erfindung beschriebene Elektrolyseanlage um eine Elektrolyseanlage im industriellen Maßstab, um z.B. Wasserstoff in industriellem Maßstab zu gewinnen. Eine typische Leistung einer solchen Elektrolyseanlage liegt z.B. bei mehr als 10 MW oder auch mehr als 20 MW.

Die Elektrolyseanlage 100 weist beispielhaft zwei Elektrolyseeinheiten bzw. Stacks 110a, 110b auf, die hier beispielhaft jeweils zwei sog. Elektrolysezellen 110.1a, 110.2a bzw. 110.1b, 110.2b aufweisen, in denen jeweils eine Protonen-Austausch-Membran (PEM) 112 vorgesehen ist. Die PEM 112 trennt die Elektrolysezellen jeweils in eine Sauerstoffseite 114 und eine Wasserstoffseite 116. Die Sauerstoffseiten 114 und die Wasserstoffseiten 116 können gemeinsam jeweils als Sauerstoffseite bzw. Wasserstoffseite einer Elektrolyseeinheit 110a, 110b angesehen werden. Weiterhin weist die Elektrolyseanlage 100 eine Energieversorgungseinheit 118 z.B. mit einem oder mehreren Transformatoren und Stromrichtern auf, um die Elektrolyseeinheiten 110a, 110b bzw. die Elektrolysezellen entsprechend betreiben zu können.

Es sei erwähnt, dass eine Elektrolyseeinheit 110a oder 110bje nach Größe und Bedarf z.B. auch mehr als zwei Elektrolysezellen aufweisen kann, z.B. auch vier, sechs, acht oder mehr Elektrolysezellen. Die Energieversorgungseinheit 118 kann z.B. auch je Elektrolyseeinheit oder auch je Elektrolysezelle je einen Transformator und einen Stromrichter aufweisen; ebenso kann z.B. ein Transformator zwei Stromrichtern zugeordnet sein. Außerdem können auch je nach Bedarf z.B. nur eine solche Elektrolyseeinheit mit zwei oder mehr Elektrolysezellen oder auch mehr als zwei, z.B. drei oder vier, Elektrolyseeinheiten vorgesehen sein, dann mit je mehreren Elektrolysezellen.

Die Elektrolyseanlage 100 weist weiterhin einen Behälter 120 auf, der als Gas-Abscheider, hier insbesondere als Sauerstoff-Abscheider bzw. Sauerstoff-Wasser-Abscheider dient. Der Behälter 120 ist über eine Fluidverbindung mit den Elektrolyseeinheiten 110a, 110b bzw. dort jeder der Elektrolysezellen 110.1a, 110.2a, 110.1b, 110.2b verbunden. Hierdurch kann ein Fluidstrom b aus dem Behälter 120 zur Elektrolyseeinheit gepumpt werden, z.B. mittels einer Pumpe 124, und zwar über eine geeignete Fluidverbindung 122, z.B. Rohre. Je nach Art der Elektrolyseanlage und z.B. der Anzahl der Elektrolysezellen und/oder Elektrolyseeinheiten können auch mehrere Fluidverbindungen (d.h. separate Leitungen) vorgesehen sein. Beispielsweise kann z.B. eine Fluidverbindung für zwei oder vier Elektrolysezellen vorgesehen sein.

Die Elektrolyseeinheiten 110a, 110b sind zudem über eine Fluidverbindung 126, z.B. Rohre, mit dem Behälter 120 verbunden. Durch die Fluidverbindung 126 kann ein Fluidstrom c aus den Elektrolyseeinheiten 110a, 110b, dort der Sauerstoffseite 114 bzw. der Sauerstoffseite einer jeden Elektrolysezelle, zum Behälter 120 gepumpt werden; hierfür kann ebenfalls die Pumpe 124 ausreichend sein. Je nach Art der Elektrolyseanlage und z.B. der Anzahl der Elektrolysezellen können auch hier mehrere Fluidverbindungen (d.h. separate Leitungen) vorgesehen sein. Beispielsweise kann z.B. eine Fluidverbindung für zwei oder vier Elektrolysezellen vorgesehen sein. Bei dem gezeigten Beispiel werden zunächst die Fluidströme der Elektrolysezellen einer jeden Elektrolyseeinheit zusammengefasst, dann werden die Fluidströme der Elektrolyseeinheiten zusammengefasst. Allgemein werden Fluidströme von einer Sauerstoffseite 114 mehrerer Elektrolysezellen zusammengefasst und als prozessierter Fluidstrom c zum Gas-Abscheider 120 geführt.

Außerdem weist die Elektrolyseanlage 100 einen weiteren Gas-Ascheider 130, hier einen Wasserstoff-Abscheider bzw. Wasserstoff-Wasser-Abscheider auf. Die Elektrolyseeinheiten 110, 110b sind dabei über eine Fluidverbindung 132, z.B. Rohre, mit dem Gas-Ascheider 130 verbunden. Durch die Fluidverbindung 132 kann ein Fluidstrom e aus den Elektrolyseeinheiten 110a, 110b, dort der Wasserstoffseite 116 bzw. der Wasserstoffseite einer jeden Elektrolysezelle, zum Gas-Ascheider 130 geführt werden. Je nach Art der Elektrolyseanlage und z.B. der Anzahl der Elektrolysezellen können auch hier mehrere Fluidverbindungen (d.h. separate Leitungen) vorgesehen sein. Beispielsweise kann z.B. eine Fluidverbindung für zwei oder vier Elektrolysezellen vorgesehen sein. Denkbar sind auch mehrere Gas-Abscheider.

Bei einem Betrieb der Elektrolyseanlage 100 wird nun der Fluidstrom b, der Wasser aufweist, vom Behälter 120 zu den Elektrolyseeinheiten 110a, 110b bzw. deren Elektrolysezellen gepumpt. Dort wird das Wasser in Sauerstoff und Wasserstoff umgesetzt. Hierzu wird eine elektrische Spannung an die Elektrolyseeinheiten 110a, 110b angelegt, der Wasserstoff wird elektrochemisch durch die PEM 112 auf die Wasserstoffseite 116 transportiert und kann von dort, ggf. noch mit Wasserdampf und einer flüssigen Wasserphase vermischt, als Strom e dem Wasserstoff-Abscheider 130 zugeführt werden. Dort kann der Wasserstoff abgeschieden werden und als Strom f z.B. für eine weitere Verwendung abgeführt oder gespeichert werden. Im Wasserstoff-Abscheider 130 abgeschiedene Wasser kann z.B. einer Behandlung zugeführt und dann wieder in den Hauptwasserkreislauf zurückgeführt werden.

Der Sauerstoff verbleibt zusammen mit dem Großteil des Wassers auf der Sauerstoffseite 114. Wie erwähnt, kann auf der Sauerstoffseite 114 aber auch Wasserstoff in gewisser Menge vorhanden sein. Der entstehende Fluidstrom c weist also Wasser und Gas, insbesondere Wasser, Sauerstoff und Wasserstoff, auf. Der Fluidstrom c wird, wie erwähnt, dem Behälter 120 zugeführt.

Da in den Elektrolyseeinheiten 110a, 110b Wasser in Sauerstoff und Wasserstoff umgesetzt wird und der Sauerstoff und der Wasserstoff abgeführt werden, wird die Menge an Wasser geringer und es kann daher - um einen kontinuierlichen Betrieb aufrechtzuerhalten - als Strom a von extern neues Wasser (sog. Make-Up-Wasser) zugeführt werden.

Dieses Wasser a kann zuvor z.B. noch aufbereitet werden, was für die vorliegende Erfindung jedoch nicht weiter relevant ist. Ebenso kann ggf. im Wasserstoff-Abscheider 130 abgeschiedenes Wasser wieder in den Behälter 120, ggf. ebenfalls nach vorheriger Aufbereitung, geführt werden.

Wie erwähnt, wird im Behälter 120 Gas, insbesondere Sauerstoff (und ggf. noch vorhandener Wasserstoff), vom Wasser abgetrennt; das hierbei abgetrennte bzw. abgeschiedene Gas sowie kann als sauerstoffhaltiger Fluidstrom g z.B. für eine weitere Verwendung abgeführt und ggf. gespeichert werden. Wie erwähnt, kann der sauerstoffhaltiger Fluidstrom g dabei nicht nur Sauerstoff sondern auch Wasserstoff aufweisen.

Von dem sauerstoffhaltigen Fluidstrom g kann ein (weiterer) sauerstoffhaltiger Fluidstrom h abgetrennt werden, der dann in einem Rezirkulationskreis später wieder dem Sauerstoffbereich der Elektrolyseanlage zugeführt werden soll. Denkbar ist auch, dass der gesamte sauerstoffhaltige Fluidstrom g dem Rezirkulationskreis zugeführt wird.

In dem Rezirkulationskreis ist beispielhaft ein Gebläse 142 vorgesehen, mittels dessen der sauerstoffhaltige Fluidstrom g, h angesaugt und dann (nur der sauerstoffhaltige Fluidstrom h) weiter zum Sauerstoffbereich der Elektrolyseanlage, geblasen wird. Dabei wird der sauerstoffhaltige Fluidstrom h, bevor er dem Sauerstoffbereich der Elektrolyseanlage 100 zugeführt wird, durch eine Einrichtung 148 zur Wasserstoffentfernung, insbesondere einen Rekombinationsreaktor, geführt. Der dann (nach der Entfernung des Wasserstoffs) als sauerstoffhaltiger Fluidstrom k bezeichnete Fluidstrom wird dann insbesondere noch, bevor er dem Sauerstoffbereich der Elektrolyseanlage zugeführt wird, durch eine Einrichtung 150 zur Reinigung geführt.

Optional kann der Fluidstrom vor der Einrichtung 148 durch einen ersten Wärmetauscher 144 (z.B. ein sog. "Feed/Effluent-Heat exchanger") und/oder einen zweiten Wärmetauscher 146 geführt werden. Dies dient, neben der Kompressionswärme des Gebläses, für eine besserer Temperaturkontrolle des Fluidstroms h bzw. k.

Ein Teil m des sauerstoffhaltigen Fluidstroms k kann, nach der Einrichtung 150 zur Reinigung und bevor er dem Sauerstoffbereich der Elektrolyseanlage zugeführt wird, zur anderweitigen Verwendung abgeführt werden. Der verbleibende sauerstoffhaltigen Fluidstrom, der dem Sauerstoffbereich der Elektrolyseanlage zugeführt wird, ist hier mit d bezeichnet. Insbesondere wird der sauerstoffhaltige Fluidstrom d beispielhaft dem Behälter 120 zugeführt.

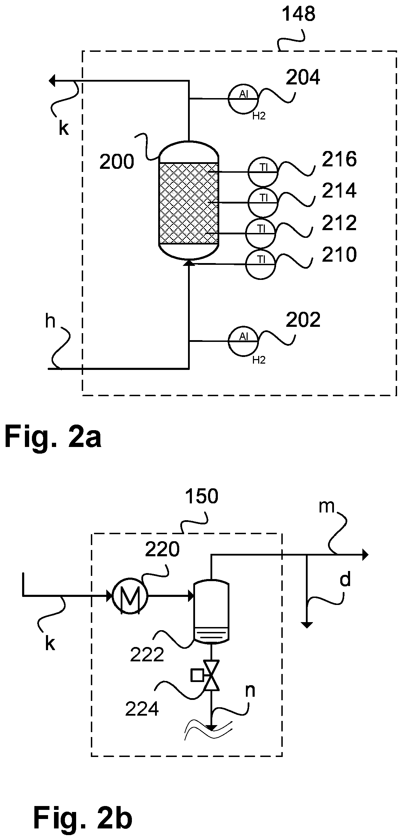

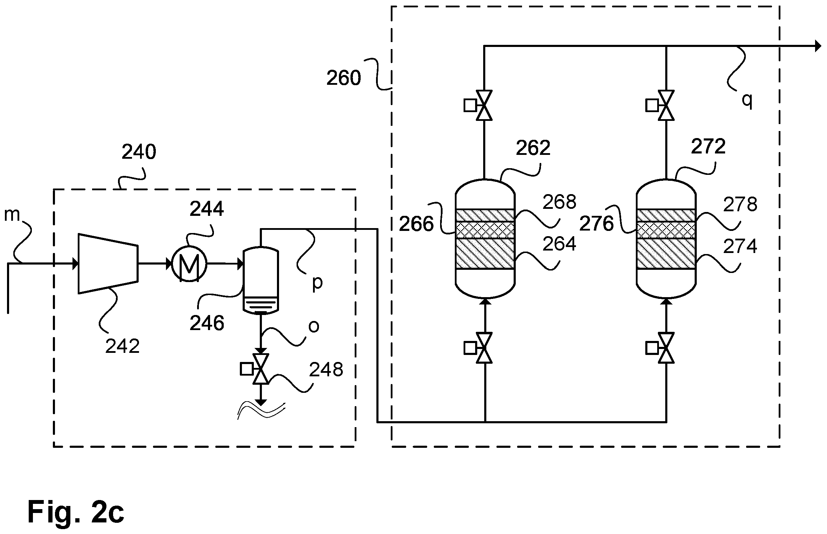

Die Einrichtung 148 zur Wasserstoffentfernung, die Einrichtung 150 zur Reinigung sowie der weitere Verlauf es Teils m bzw. dessen Verwendung werden in den Figuren 2a, 2b, 2c detaillierter gezeigt und beschrieben.

Außerdem weist die Elektrolyseanlage 100 beispielhaft eine Steuereinheit 160 auf, mittels welcher z.B. die Elektrolyseeinheiten 110a, 110b und/oder die Energieversorgungseinheit 118 angesteuert werden und ggf. auch überwacht werden können.

Die Steuereinheit 160 kann zudem beispielsweise als Überwachungseinrichtung dienen, um eine Wasserstoff-Konzentration im sauerstoffhaltigen Fluidstrom zu überwachen. Hierzu kann die Elektrolyseanlage 100 z.B. einen geeigneter Sensor oder anderer Detektor aufweisen (vgl. hierzu Figur 2a), mittels dessen die Wasserstoff-Konzentration im sauerstoffhaltigen Fluidstrom k ermittelt oder gemessen werden kann. Die Steuereinheit 160 bzw. die Überwachungseinrichtung kann dann z.B. Messignale des Sensors erfassen und auswerten.

Die Menge des sauerstoffhaltigen Fluidstroms, die dem Sauerstoffbereich der Elektrolyseanlage zugeführt wird, kann damit derart eingestellt oder angepasst werden, dass die Wasserstoff-Konzentration einen vorgegebenen Schwellwert, z.B. 2 Vol %, nicht übersteigt. Sollte dem doch so sein, können verschiedene Sicherheitsmaßnahme eingeleitet werden. Es kann die Elektrolyseeinheit abgeschaltet werden, z.B. indem von der Steuereinheit 160 die Energieversorgungseinheit 118 entsprechend angesteuert wird. Es kann auch der prozessierten Fluidstroms c von der Sauerstoffseite 114 der Elektrolyseeinheit zu dem Gas-Abscheider 120 unterbrochen werden, z.B. indem ein Ventil 164 zum Schließen angesteuert wird. Alternativ oder zusätzlich kann auch der sauerstoffhaltigen Fluidstrom h unterbrochen werden z.B. durch ein Ventil vor dem Gebläse 142.

In Figur 2a ist die Einrichtung 148 zur Wasserstoffentfernung, also z.B. ein Rekombinationsreaktor, im Detail dargestellt. Wie erwähnt, wird hier der sauerstoffhaltige Fluidstrom h zugeführt und dort dann dem eigentlichen Reaktor bzw. Rekombinationsreaktor 200; dieser wird eintrittsseitig z.B. bei ca. 65°C -120°C, jedoch mindestens 10 bis 20 K oberhalb des Wassertaupunktes betrieben, um die Funktionalität des Katalysators zu garantieren. Die GHSV liegt bei 2000 bis 15000/h. Zudem sind die Größe des Reaktors 200 und die Eintrittstemperatur des sauerstoffhaltigen Fluidstroms bevorzugt so gewählt, dass mindestens 20% des anfallenden Wasserstoffes umgesetzt werden, um ein Anspringen des Reaktors in einem Störfall zu gewährleisten. Hierfür können Eintritts- und/oder Austrittskonzentrationen kontinuierlich analytisch überwacht werden, und zwar z.B. mittels der Sensoren 202 und/oder 204. Ebenso können Temperaturen innerhalb des Katalysatorbettes mittels der Sensoren 210, 212, 214, 216 überwacht werden. Die hier genannte Sensoren können z.B. mittels der Überwachungseinrichtung 160 ausgelesen werden. Nach Entfernung von Wasserstoff wird der sauerstoffhaltige Fluidstrom als Fluidstrom k abgeführt. Wie erwähnt, kann es insbesondere ausreichend sein, nur eine Temperatur zu überwachen, weil damit bereits auf die Wasserstoffkonzentration rückgeschlossen werden kann.

In Figur 2b ist die Einrichtung 150 zur Reinigung im Detail dargestellt. Wie erwähnt, wird hier der sauerstoffhaltige Fluidstrom k zugeführt. Dort können anfallendes Wasser (z.B. Reaktionswasser) sowie Stäube (oder Partikel) aus dem sauerstoffhaltige Fluidstrom k über einen Direktkühler 220 gewaschen und/oder in einem Filter 222 auskondensiert und/oder gefiltert werden. Es kann, wie gezeigt, ein Abscheider verwendet werden, oder ein Filter zur Vermeidung der Wasserkontamination des Wasserkreislaufes der Elektrolyse. Wasser n kann z.B. über ein Ventil 224 abgeführt werden. Der gereinigte sauerstoffhaltige Fluidstrom wird als Fluidstrom d abgeführt und dem Sauerstoffbereich der Elektrolyseanlage zugeführt. Wie erwähnt, kann ein Teil jedoch zur weiteren Verwendung abgeführt werden.

In Figur 2c ist der weitere Verlauf des Teils m bzw. dessen Verwendung detaillierter gezeigt. Hier wird der Teil m des sauerstoffhaltige Fluidstroms einer Produktgaskompression 240 und dann einer Trocknungseinheit 260 zugeführt. In der Produktgaskompression 240 bzw. der entsprechenden Einheit ist z.B. ein Kompressor 242 vorgesehen. Optional können dann auch ggf. immer noch anfallendes Wasser sowie Stäube aus dem sauerstoffhaltige Fluidstrom bzw. dessen Teil m über einen Direktkühler 244 gewaschen und/oder in einem Filter 246 auskondensiert und/oder gefiltert werden. Wasser o kann z.B. über ein Ventil 248 abgeführt werden. Der komprimierte und ggf. gereinigte sauerstoffhaltige Fluidstrom wird als Fluidstrom p abgeführt und der Trocknungseinheit 260 zugeführt.

Über die Einrichtung 148 wird bereits ein Teil des Wasserstoffes aus dem sauerstoffhaltige Fluidstrom (Produktgas) entfernt. Durch die Temperatur und den Druck des Fluidstroms h bzw. k sowie der Größe des Reaktors 200 kann die Wasserstoffkonzentration bereits so weit reduziert werden, so dass stromab der ein-oder mehrstufigen Produktgaskompression 240 eine Trocknungseinheit 260 ausreichend sein kann oder innerhalb von Trocknungsbetten 262, 272 der Trocknungseinheit 260 eine kleine Rekombinationskatalysatorschicht 266, 278 nach einem Trocknungsbett 264, 274 und vor einem weiteren Trocknungsbett 268, 278 ausreicht. Da besonders unter höherem Druck und unter Abwesenheit von Wasser diese Art der Katalysatoren 266, 278 hoch aktiv sind.

Die vorgelagerte Trocknungsschicht 264, 274 kann insbesondere ausgelegt sein, um etwaiges Wasser im Strom p zu entfernen, die nachliegende Trocknungsschicht 268, 278 kann insbesondere ausgelegt sein um Rekombinationswasser aus 266, 276 aufzunehmen, um ein trockenes finales Produkt q zu erhalten.

Alle anfallenden wässrigen Ströme aus 150 und 240 werden z.B. verworfen oder einer Wasserreinigung (zugeführt, um zusammen mit dem Frischwasser den Make-Up-Strom a mit den nötigen Reinheitsanforderungen für die PEM-Elektrolyse zu erhalten.

Durch die dargestellte Konfiguration kann mit geringem apparativem Aufwand und minimalen Betriebskosten ein explosionstechnisch sicheres System aufgebaut werden, das die Anzahl der ansonsten Explosionsdruckfest auszuführenden Ausrüstungen und Rohrleitungsbauteile und dergleichen im Sauerstoff-System der PEM-Elektrolyse deutlich begrenzt und/oder die Auslegung auf den Betriebsdruck reduziert. Dadurch ist eine Nutzung des Nebenproduktes der PEM Elektrolyse, nämlich Sauerstoff, möglich.

Bei Wegfall der Berücksichtigung von Explosionsdrücken können Stacks bzw. Elektrolysezellen anodenseitig auch bei höheren Drücken betrieben werden, und zwar ohne zusätzliche Druckfestigkeitsansprüche an das Equipment. So kann z.B. statt bisherig atmosphärischem Betrieb mit Auslegung auf 40 bar ohne Sauerstoffnutzung wegen Explosionsrisiken, nun anodenseitig auch ein Betrieb über atmosphärischem Druck bis hin zum maximalen Betriebsdruck Anodenseite (z.B. 6 bara) realisiert werden. Dies führt zu Einsparungen von Kompressionsstufenstufen wie die Einheit 240.

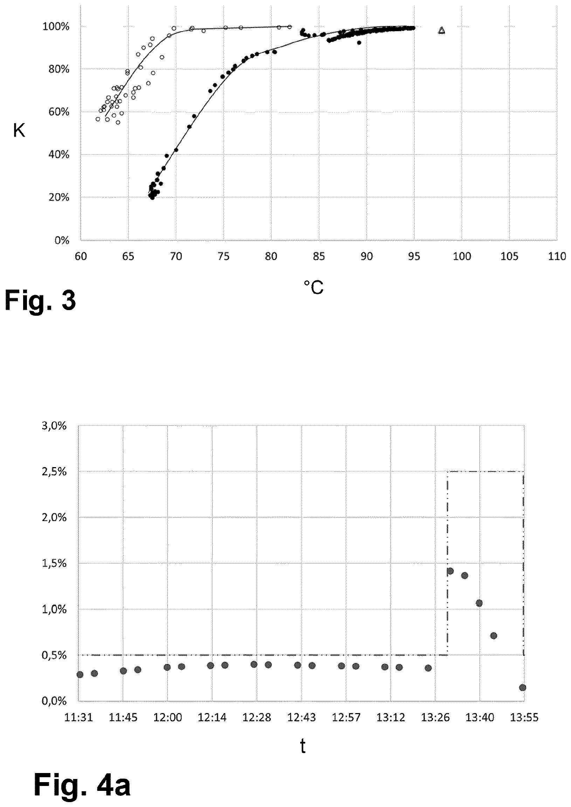

Anhand der Figuren 3, 4a, 4b, 5a und 5b sollen nachfolgend verschiedene beispielhafte Experimente zur weiteren Erläuterung der Erfindung beschrieben werden.

In Figur 3 ist ein erstes Experiment dargestellt. Hierzu sind in einem Diagramm eine Konversion K in % über einer Einlasstemperatur T in °C am Rekombinationskatalysator aufgetragen. Hierzu sind eine GHSV 2000/h durch Kreise gezeigt, GHSV 6000/h durch Punkte, und GHSV 15000/h durch Dreiecke. Eine Wasserstoffkonzentration lag bei 5000vppm, der Druck bei 1,2 bis 1,3 bara und der Wassertaupunkt lag bei 60°C.

Ein 20 ml Rekombinationskatalysator wurde einem wassergesättigten Sauerstoff-/Wasserstoff-Gemisch ausgesetzt und die Wasserstoffkonversion unter Normalbedingungen der Elektrolyse ermittelt. Es hat sich gezeigt, dass bei 70-80°C und einer Gasbelastung von 2000 bis 6000 1/h bereits 90% - 95% WasserstoffKonversion realisierbar sind.

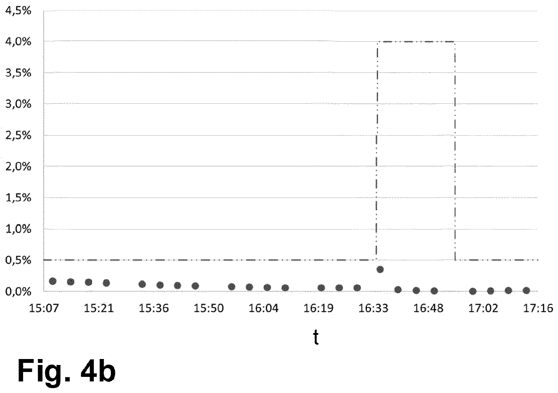

In den Figuren 4a, 4b ist ein zweites Experiment dargestellt. Hierzu sind in Diagrammen jeweils eine Wasserstoff-Konzentration C in vol-% über einer Zeit t in min aufgetragen. Die Wasserstoff-Konzentration für den Eintritt des Reaktors ist mit der gestrichelten Linie gezeigt, die Wasserstoff-Konzentration für den Austritt des Reaktors bzw. Rekombinators mit Punkten. Die Bedingungen waren GHSV 6000/h, ein Druck von 1,2 bara und ein Wassertaupunkt von 60°C. Beim Diagramm in Figur 4a lag die Einlasstemperatur bei ca. 68 bis 70°C, beim Diagramm in Figur 4b bei ca. 75 bis 80°C.

Ein 20 ml Rekombinationskatalysator wurde einem wassergesättigten Sauerstoff-/Wasserstoff-Gemisch ausgesetzt. Die Wasserstoffkonzentration betrug ca. 5000 vppm. Anschließend wurde die Wasserstoffkonzentration sprunghaft auf 2,5 vol-% - 4 vol-% am Eintritt erhöht und die Austrittskonzentration am Rekombinator bestimmt.

Es hat sich gezeigt, dass ein plötzlicher Anstieg der Wasserstoffkonzentration über einen Rekombinationskatalysator abgefangen und durch den resultierenden adiabaten Temperaturanstieg im Reaktor nahezu komplett entfernt werden kann. Das bedeutet ein Rekombinationskatalysator kann in einem Sauerstoffkreis eine weitere Anreicherung von Wasserstoff unterbinden.

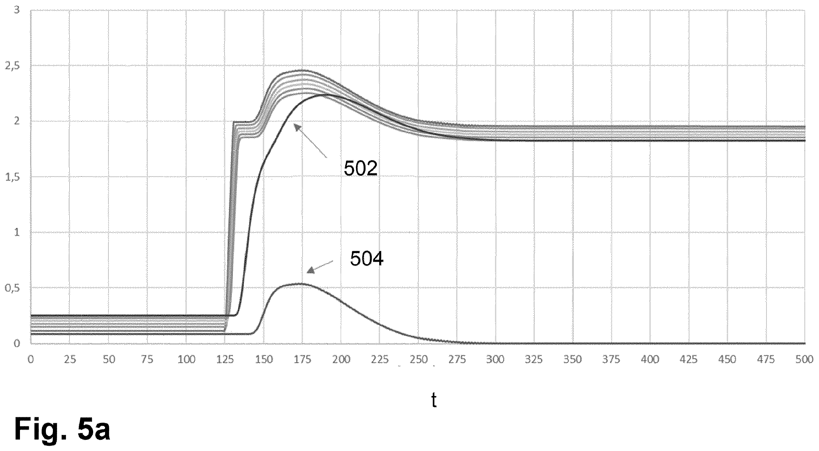

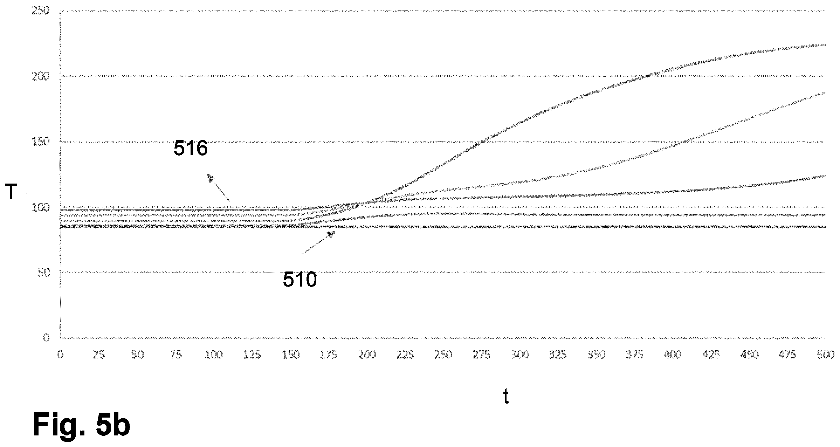

In den Figuren 5a, 5b ist ein drittes Experiment dargestellt, und zwar eine dynamische Simulation. Hierzu sind in einem Diagramm in Figur 5a eine Wasserstoff-Konzentration C in vol-% über einer Zeit t in s aufgetragen, und in einem Diagramm in Figur 5b eine Temperatur T in °C im Rekombinationsreaktor über einer Zeit t in s.

Hier werden beispielhaft 18 Elektrolysezellen z sechs Elektrolyseeinheiten in eine gemeinsame Sammelleitung zusammengeführt. Alle Elektrolysezellen sollen auf 100% Last sein. Die Wasserstoffproduktion einer Elektrolyseeinheit beträgt beispielhaft 134 Nm³/h. Daraus resultiert eine Rezirkulationsrate von ca. 6700Nm³/h Sauerstoff (Faktor 50). Die Einbindung des Rezyklates erfolgt an der letzten vom Gas-Abscheider am weitesten entfernten Elektrolyseeinheit. In der Simulation wird das Versagen einer Elektrolysezelle in der letzten Elektrolyseeinheit nach 125 s abgebildet. In dieser Betrachtung soll die Kompressionswärme genutzt werden, um über den Wassertaupunkt für die Katalyse zu kommen.

Es hat sich gezeigt, dass durch die beschriebenen Maßnahmen die Wasserstoff-Konzentration im Rezirkulationskreis auf unter 2 vol-% limitiert werden kann. In Figur 5a sind mit 502 und 502 die Konzentrationsverläufe der Sensoren 202 bzw. 204 gezeigt. Die nicht bezeichneten Konzentrationsverläufe sind diejenigen der Elektrolyseeinheiten. Der kurze Anstieg auf 2,5 vol-% in Figur 5a ist mit dem anfänglich "kalten" Rekombinationsreaktor zu erklären und den daraus resultierenden höheren Wasserstoff-Austrittswerten.

In Figur 5b sind mit 510 und 516 die Temperaturverläufe der Sensoren 210 bzw. 216 gezeigt. Die nicht bezeichneten Temperaturverläufe sind diejenigen der dazwischenliegenden Sensoren.

## Patentansprüche

1. Verfahren zum Betreiben einer Elektrolyseanlage (100), in der Wasser in mehreren Elektrolysezellen (110.1a, 110.2a, 110.1b, 110.2b) in Sauerstoff und Wasserstoff umgesetzt wird,
wobei Fluidströme von einer Sauerstoffseite (114) der mehreren en (110.1a, 110.2a, 110.1b, 11 0.2b) zusammengefasst und als ein prozessierter Fluidstrom (c) zu einem Gas-Abscheider (120) geführt werden, wobei der prozessierte Fluidstrom (c) Wasser und Gas aufweist,
wobei ein sauerstoffhaltiger Fluidstrom (g, h) von dem Gas-Abscheider (120) abgeführt wird, wobei der sauerstoffhaltiger Fluidstrom Gas aufweist,
wobei der sauerstoffhaltige Fluidstrom (h, d) einem Sauerstoffbereich der Elektrolyseanlage (100) zugeführt wird, und
wobei der sauerstoffhaltige Fluidstrom (d), bevor er dem Sauerstoffbereich der Elektrolyseanlage (100) zugeführt wird, durch eine Einrichtung (148) zur Wasserstoffentfernung, insbesondere einen Rekombinationsreaktor, geführt wird.

2. Verfahren nach Anspruch 1, wobei der sauerstoffhaltige Fluidstrom (d), nach der Einrichtung (148) zur Wasserstoffentfernung und bevor er dem Sauerstoffbereich der Elektrolyseanlage (100) zugeführt wird, durch eine Einrichtung (150) zur Reinigung geführt wird.

3. Verfahren nach Anspruch 2, wobei ein Teil (m) des sauerstoffhaltigen Fluidstroms (d), nach der Einrichtung (150) zur Reinigung und bevor er dem Sauerstoffbereich der Elektrolyseanlage (100) zugeführt wird, zur anderweitigen Verwendung abgeführt wird.

4. Verfahren nach einem der vorstehenden Ansprüche, wobei eine Wasserstoff-Konzentration im sauerstoffhaltigen Fluidstrom (h, k), insbesondere vor und/oder der Einrichtung (144) zur Wasserstoffentfernung, überwacht wird, und,
wobei eine Menge des sauerstoffhaltigen Fluidstroms (h, k, d), die dem Sauerstoffbereich der Elektrolyseanlage (100) zugeführt wird, derart eingestellt oder angepasst wird, dass die Wasserstoff-Konzentration einen vorgegebenen Schwellwert, insbesondere 2 Vol %, nicht übersteigt, und/oder
wobei, wenn die Wasserstoff-Konzentration den vorgegebenen Schwellwert übersteigt, wenigstens eine Sicherheitsmaßnahme eingeleitet wird.

5. Verfahren nach Anspruch 4, wobei die wenigstens eine Sicherheitsmaßnahme wenigstens eine der folgenden Sicherheitsmaßnahmen umfasst:
- Abschalten der mehreren Elektrolysezellen (110.1a, 110.2a, 110.1b, 110.2b),
- Unterbrechen des prozessierten Fluidstroms (c) von der Sauerstoffseite (114) der mehreren Elektrolysezellen (110.1a, 110.2a, 110.1b, 110.2b) zu dem Gas-Abscheider (120),
- Unterbrechen des sauerstoffhaltigen Fluidstroms (h).

6. Verfahren nach einem der vorstehenden Ansprüche, wobei die Elektrolyseanlage (100) zur Protonen-Austausch-Membran-Elektrolyse eingerichtet ist.

7. Verfahren einem der vorstehenden Ansprüche, wobei der sauerstoffhaltige Fluidstrom (d) dem Sauerstoffbereich der Elektrolyseanlage (100) zugeführt wird, indem der sauerstoffhaltige Fluidstrom (d) dem prozessierten Fluidstrom (c) und/oder dem Gas-Abscheider (120) zugeführt wird

8. Elektrolyseanlage (100) mit mehreren Elektrolysezellen (110.1a, 110.2a, 110.1b, 110.2b), in denen Wasser in Sauerstoff und Wasserstoff umsetzbar ist, und mit einem Gas-Abscheider (120),
wobei die Elektrolyseanlage (100) eingerichtet ist, Fluidströme von einer Sauerstoffseite (114) der mehreren Elektrolysezellen (110.1a, 110.2a, 110.1b, 110.2b) zusammenzufassen und einen prozessierten Fluidstrom (c) zu dem Gas-Abscheider (120) zu erzeugen, wobei der prozessierte Fluidstrom Wasser und Gas aufweist,
wobei die Elektrolyseanlage (100) eingerichtet ist, einen sauerstoffhaltigen Fluidstrom (g, h) von dem Gas-Abscheider (120) abzuführen und einem Sauerstoffbereich der Elektrolyseanlage (100), insbesondere dem prozessierten Fluidstrom (c) und/oder dem Gas-Abscheider (120), zuzuführen, wobei der sauerstoffhaltige Fluidstrom Gas aufweist, und
wobei die Elektrolyseanlage (100) eine Einrichtung (148) zur Wasserstoffentfernung, insbesondere einen Rekombinationsreaktor, aufweist und eingerichtet ist, den sauerstoffhaltigen Fluidstrom (h), bevor er dem Sauerstoffbereich der Elektrolyseanlage (100) zugeführt wird, durch die Einrichtung (150) zur Wasserstoffentfernung zu führen.

9. Elektrolyseanlage (100) nach Anspruch 8, weiterhin mit einer Einrichtung (150) zur Reinigung, wobei die Elektrolyseanlage (100) eingerichtet ist, den sauerstoffhaltigen Fluidstrom (g, h) nach der Einrichtung (148) zur Wasserstoffentfernung und bevor er dem Sauerstoffbereich der Elektrolyseanlage (100) zugeführt wird, durch die Einrichtung (150) zur Reinigung zu führen.

10. Elektrolyseanlage (100) nach Anspruch 8 oder 9, weiterhin mit einem Gebläse (142), wobei die Elektrolyseanlage (100) eingerichtet ist, den sauerstoffhaltigen Fluidstrom (g, h) mittels des Gebläses dem Sauerstoffbereich der Elektrolyseanlage (100) zuzuführen.

11. Elektrolyseanlage (100) nach einem der Ansprüche 8 bis 10, weiterhin mit einer Überwachungseinrichtung (160), die eingerichtet ist, eine Wasserstoff-Konzentration im sauerstoffhaltigen Fluidstrom (h, k), insbesondere vor und/oder nach der Einrichtung (148) zur Wasserstoffentfernung, zu überwachen, und
eine Menge des sauerstoffhaltigen Fluidstroms (h, d), die dem Sauerstoffbereich der Elektrolyseanlage (100) zugeführt wird, derart einzustellen oder anzupassen, dass die Wasserstoff-Konzentration einen vorgegebenen Schwellwert, insbesondere 2 Vol %, nicht übersteigt, und/oder
wenn die Wasserstoff-Konzentration den vorgegebenen Schwellwert übersteigt, wenigstens eine Sicherheitsmaßnahme einzuleiten.

12. Elektrolyseanlage (100) nach Anspruch 11, wobei die wenigstens eine Sicherheitsmaßnahme wenigstens eine der folgenden Sicherheitsmaßnahmen umfasst:
- Abschalten der Elektrolyseeinheit (110),
- Unterbrechen des prozessierten Fluidstroms (c) von der Sauerstoffseite (114) der Elektrolyseeinheit zu dem Gas-Abscheider (120),
- Unterbrechen des sauerstoffhaltigen Fluidstroms (h).

13. Elektrolyseanlage (100) nach einem der Ansprüche 8 bis 12, die zur Protonen-Austausch-Membran-Elektrolyse eingerichtet ist.

14. Elektrolyseanlage (100) nach einem der Ansprüche 8 bis 13, die eingerichtet ist, ein Verfahren nach einem der Ansprüche 1 bis 7 durchzuführen.
